# EUROPEAN PATENT SPECIFICATION

(11) **EP 0 455 136 B1**
(45) Date of publication and mention of the grant of the patent: **17.08.1994**
(21) Application number: 91106685.0
(22) Date of filing: 25.04.1991
(51) Int. Cl.: A23L 1/33

(54) **Method of producing an edible product of fish meat paste simulating crab leg meat**
Verfahren zur Herstellung eines essbaren Produktes aus Fischfleischpaste, welche das Beinfleisch der Krabbe simuliert
Méthode pour la production d'un produit de pâte de viande de poisson simulant de viande de jambe de crabe

(30) Priority: 01.05.1990 JP 115544/90
(43) Date of publication of application: 06.11.1991
(73) Proprietor: SUGIYO CO., LTD., Ishikawa (JP)
(72) Inventor: Sugino, Yoshito, Nanao, Ishikawa (JP)
(74) Representative: Tiedtke, Harro, Dipl.-Ing.

(56) References cited:
- EP-A- 0 362 417
- US-A- 4 900 570
- DATABASE WPIL/DERWENT accession no. 89-368585 (50),1989, Derwent Publications Ltd., London, GB; & JP - A-1277473 (Fushimi Kamaboko K.K.) 27.04.1988
- PATENT ABSTRACTS OF JAPAN vol. 9, no. 247 (C-307)(1970), 3 October 1985; & JP - A - 60102171 (YAMASA KAMABOKO K.K.) 06.06.1985
- PATENT ABSTRACTS OF JAPAN vol. 12, no. 391 (C-537)(3238), 18 October 1988; & JP - A - 63137660 (FUMIHIKO MASUDA) 09.06.1988

## Description

This invention relates to a method of producing an edible product of fish meat paste simulating crab leg meat and the edible product produced by the method. More particularly, this invention relates to a method of producing an improved substitute for crab leg meat which not only gives a particular oral sensation as if real crab leg meat were being eaten but also has an appearance closely resembling real crab leg meat and consequently has a high commercial value.

According to the document JP-A-60102171 there is disclosed a method of producing a paste product having teeth touch of crab meat of its own, wherein a large number of short fiber meat slant to the longer direction of the product. This method includes the steps of cutting plural sheets into a material like noodle line, piling and binding of this material, cutting the piled material slantingly to the longer direction to form short fiber blocks, rearranging the blocks in such a way that the section of the blocks is made into a side, connecting the blocks to make continuous block and to pack it, and cutting the last one into a given length.

Futher, according to the document JP-A-63137660 there is known a method for continuously preparing crab-like food, wherein ground meat is extruded on a baking conveyor having baking plates. The ground meat is pushed with a forcing roll and filled in the baking plate in a manner divided into a side having protrusions and a side to be rolled into a thin sheet by a parallel line extending along the longitudinal direction. Then, the formed protrusions of the baked filled meat are colored and the side free from the protrusions is incised and bundled to obtain the crab-like food.

There are also known other methods of making an edible product simulating crab leg meat from fish meat paste, such as those disclosed in Japanese Patent Publication Nos. 61-14784 through 61-14789. In these methods, several sheets of coagulated fish meat paste are cut into noodle-like strings, and the cut sheets are piled one upon another so that the strings are put together into a bundle, which is cut aslant into a plurality of blocks containing short fibers of coagulated fish meat paste, which resemble those of real crab leg meat. The methods include a troublesome step of piling up the sheets of coagulated fish meat paste that have been cut into noodle-like strings, and the devices for carrying out the methods are much complicated.

It is therefore one object of the invention to provide a method of producing an edible product of fish meat paste which not only gives a particular oral sensation as if real crab leg meat were eaten but also has an appearance more closely resembling real crab leg meat than the various substitutes for crab meat known in the prior art.

It is another object of the invention to provide such a method as mentioned above which can be carried out in a simpler and more efficient manner than the known methods of producing similar products simulating crab leg meat.

The object of the invention are achieved by means of the method defined in claim 1.

An embodiment of this method comprises the first, second, third and fourth steps of the above-mentioned method, and additionally a fifth step of successively turning over each of the wrapped blocks prepared in the first to fourth steps so that the blocks lie on their side on the conveyor and, as they are conveyed, successively cutting each of the blocks into two halves at a small angle relative to the longitudinal direction thereof.

The coagulated fish meat paste used in the invention is prepared by mixing kneaded fish meat called "surimi" in Japanese, seasonings and other additives with water, kneading the mixture, forming the kneaded mass into a sheet, and coagulating the sheet by heating. Either the block or the edible wrapping film or both are so colored that the block wrapped in the film appears like real crab leg meat.

In the final product produced by the third method, the bundled strings are exposed in the cut surface of the wrapped block as if they were muscle fibers of crab leg meat, so that the product resembles crab leg meat more closely than otherwise.

Preferable embodiments of the invention are defined in the claims 2 to 4.

The invention will now be described in further detail with reference to the enclosed figures, wherein:
Fig. 1 is a schematic top plan view of an apparatus for carrying out the method of the invention;
Fig. 2 is a schematic perspective view to a final product produced by the method of the invention.

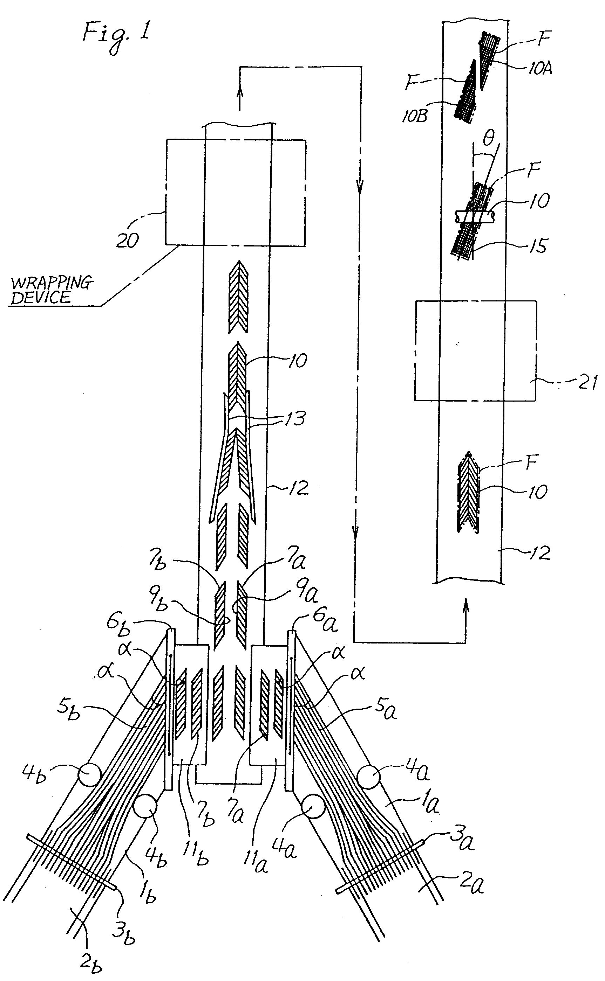

In the method of the invention shown in Fig. 1, a pair of stripes of heat-coagulated fish meat paste 2a and 2b are used as a starting material. As the stripes 2a and 2b are conveyed on a pair of conveyors la and lb arranged so as to form an inverted V in top plan view, the stripes are cut by a pair of slitters 3a and 3b into two groups of noodle-like strings or threads, which are put together by two pairs of guide rollers 4a and 4b into two continuous, elongated bundles 5a and 5b generally rectangular in transverse section. In the second step, as the bundles 5a and 5b are conveyed longitudinally, a pair of cutters 6a and 6b each having a blade extending aslant relative to the running direction of each of the conveyors 1a and 1b successivley cut the bundles 5a and 5b, respectively, aslant relative to the directions in which they are conveyed, so that two groups of block components 7a and 7b are produced. Each of the block components 7a and 7b is of generally parallelepipedic shape and has a front end making an acute angle a with the longitudinal direction of the block component.

In the third step, the block components 7a and 7b cut by the two cutters 6a and 6b, respectively, are conveyed by a pair of lateral conveyors lla and llb running sideways toward each other and transferred onto a central conveyor 12 arranged between the two lateral conveyors 11a and 11b so as to run perpendicularly to the running direction of the lateral conveyors 11a and 11b, so that on the central conveyor 12 the block components 7a and 7b are arranged side by side in pairs, with the opposite cut surfaces 9a and 9b of each pair of block components facing each other. The lateral conveyors lla and llb and the central conveyor 12 are so constructed and arranged that the block components 7a and 7b can be transferred smoothly from the lateral conveyors 11a and 11b onto the central conveyor 12 without being turned sideways or upside down. As the central conveyor 12 advances, a pair of narrowing guide rails 13 put each paired block components 7a and 7b together into a single block 10 with the opposite cut surfaces 9a and 9b of the paired block components contacting each other. The blocks 10 thus formed look like the nocked end of an arrow.

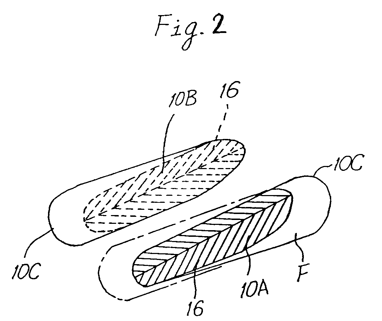

In the fourth step, the blocks 10 are individually wrapped in a sheet of edible film F by a wrapping device schematically shown at 20. In a copending application, the same inventor has proposed a method of wrapping a core material in a sheet of edible membrane. This method can also be used in the present invention for wrapping the block 7 or 10. Either the film or the block or both are colored so as to resemble natural crab leg meat. Actually, the wrapped block 10 has its ends rounded by the wrapping film F as at 10C in Fig. 2.

When the bundle 5 (5a, 5b) of strings is cut into a block component 7 (7a 7b), if the length of the short strings included in the block component is set to 1 cm to 2.5 cm, the final product gives an oral sensation quite similar to that experienced when natural crab claw meat is eaten. If the length is set to 2.5 cm to 5 cm, the final product gives an oral sensation similar to that experienced when natural crab leg meat is eaten. The angle α at which the bundle of strings is cut into block components and the length of the cut strings may vary and never limit the scope of the invention in any way.

A further embodiment of the method is intended to produce a product having an increased area in which a pattern closely resembling that of the muscle fibers of natural crab leg meat is exposed thereby to increase the commercial value of the product.

This embodiment comprises the first to fourth steps of the previously described method and additionally a fifth step in which the wrapped blocks 10 prepared by the first to fourth steps are successively turned sideways on the central conveyor 12 by means of a suitable device schematically shown at 21 so as to lie on their side and slightly aslant, that is, making an acute angle ϑ with the running direction of the conveyor 12, and as the blocks 10 are conveyed, each of the blocks lying on its side is cut generally diagonally into two halves 10A and 10B by a rotary cutter having a cutting blade 15 arranged along the running direction of the conveyor 12. Each of the two halves 10A and 10B obtained from a single block 10 has a cut surface 16 in which the component short strings of fish meat paste are exposed in a pattern closely resembling the muscle fibers of real crab leg meat, as shown in Fig. 2.

In Fig. 1 the wrapped block 10 lies on its side and slightly aslant relative to the running direction of the conveyor 12. The block 10 may lie on its side not aslant but in the same direction as the running direction of the conveyor 12, with the cutter blade 15 set aslant relative to the running direction of the conveyor 12.

In Fig. 1, the blocks 10 are cut diagonally. The cutting angle ϑ is preferably such that the length of the cut surface 16 is 50 to 100 % of that of the whole block 10 since the angular range gives the product a good appearance quite similar to natural crab leg meat.

As explained above in detail, the invention has successfully provided a product of fish meat paste simulating natural crab leg meat in which a pattern similar to the particular muscular pattern of crab leg meat appears in a cut surface of the product thereby to give the product a good appearance.

In accordance with the method of the invention, it is possible to produce a substitute for natural crab leg meat efficiently in a series of steps by cutting two stripes of heat-coagulated fish meat paste into noodle-like strings as the stripes are conveyed, putting the strings together into a pair of continuous bundles, cutting each of the bundles aslant to produce block components made of fiber-like strings of fish meat paste, putting each pair of block components together into a single block like the nocked end of an arrow, and wrapping each block in a sheet of edible film.

In accordance with the further embodiment of the method, it is possible to obtain a substitute for real crab leg meat successively and efficiently by cutting into two halves each of the wrapped blocks obtained by the second method of the invention aslant at a small angle as viewed in side elevation, thereby exposing the bundled strings in the cut surface of each of the two halves of the block as if they were muscular tissues of crab leg meat, so that the final product resembles real crab leg meat more closely than otherwise.

## Claims

1. A method of producing a product of fish meat paste simulating natural crab leg meat, which comprises:
a first step of cutting a pair of stripes (2a, 2b) of heat-coagulated fish meat paste into two groups of noodle-like strings as each of said stripes is longitudinally conveyed by a conveyor (1a; 1b), and putting said strings of each of said groups together into a continuous, elongated bundle (5a, 5b) generally rectangular in transverse section;
a second step of successively cutting each of said bundles (5a, 5b) aslant relative to the longitudinal direction thereof as each of said bundles is individually conveyed so as to produce a plurality of block components (7a, 7b) of generally parallelepipedic shape each having an acute angle (α) in the forward end thereof;
a third step of conveying said block components (7a, 7b) side by side in pairs and putting each pair of block components together into a single block (10) shaped like the nocked end portion of an arrow, with one cut surface (9a) of one block component (7a) in each pair contacting the opposite cut surface (9b) of the other block component (7b); and
a fourth step of successively wrapping each of said blocks in a sheet (F) of edible film as they are conveyed.

2. The method according to claim 1, **characterized in** **that** said method comprises additionally a fifth step of successively turning sideways each of said wrapped blocks (10) prepared in said first to fourth steps so that said wrapped blocks lie on their side on said conveyor (12) and, as they are conveyed, successively cutting each of said blocks into two halves (10A, 10B) at a small angle (Θ) relative to the longitudinal direction thereof.

3. The method according to claim 1 or 2, **characterized in that** said sheet of edible film is so colored that said wrapped blocks appear like natural crab leg meat.

4. An edible product obtainable by the method according to any of claims 1 to 3.

## Patentansprüche

1. Verfahren zur Herstellung eines Produkts aus Fischfleischpaste, welches natürliches Krabbenbeinfleisch simuliert und folgende Schritte aufweist:
einen ersten Schritt zum Schneiden zweier Streifen (2a, 2b) aus hitzekoagulierter Fischfleischpaste in zwei Gruppen nudelartiger Stränge, so daß jeder der Streifen mit Hilfe eines Fördergerätes (1a; 1b) der Länge nach gefördert wird, und zum Zusammenfassen der Stränge jeder Gruppe in ein kontinuierliches, verlängertes, im Querschnitt generell rechteckförmiges Bündel (5a, 5b);
einen zweiten Schritt zum nachfolgenden, relativ zu dessen Längsrichtung schrägen Schneiden jedes der Bündel (5a, 5b), während jedes der Bündel einzeln gefördert wird, so daß eine Vielzahl an generell quaderförmigen Blockkomponenten (7a, 7b) hergestellt wird, wobei jede an ihrem Vorderende einen spitzen Winkel (α) hat;
einen dritten Schritt zum paarweisen Fördern der Blockkomponenten (7a, 7b) Seite an Seite und zum Zusammenfassen jedes Blockkomponentenpaares zu einem einzigen Block (10), der wie der gekerbte Endabschnitt eines Pfeils geformt ist, wobei eine Schnittfläche (9a) einer Blockkomponente (7a) in jedem Paar die gegenüberliegende Schnittfläche (9b) der anderen Blockkomponente (7b) berührt; und
einen vierten Schritt zum nachfolgenden Einwickeln jedes Blocks in eine Hülle (F) aus eßbarem Film, während diese gefördert werden.

2. Verfahren gemäß Anspruch 1, **dadurch gekennzeichnet, daß** das Verfahren zusätzlich einen fünften Schritt zum nachfolgenden Seitwärtsdrehen bzw. -wenden jedes der in dem ersten bis vierten Schritt zubereiteten eingewickelten Blöcke (10) hat, so daß beim Fördern die eingewickelten Blöcke auf ihrer Seite auf dem Fördergerät (12) liegen, wobei nachfolgend jeder der Blöcke relativ zu deren Längsrichtung bei einem relativ zu seiner Längsrichtung kleinen Winkel (Θ) in zwei Hälften (10A, 10B) geschnitten wird.

3. Verfahren gemäß dem Anspruch 1 oder 2, **dadurch** **gekennzeichnet, daß** die Hülle aus eßbarem Film so gefärbt ist, daß die eingewickelten Blöcke wie natürliches Krabbenbeinfleisch erscheinen.

4. Eßbares Produkt, daß aus dem Verfahren gemäß einem beliebigen der Ansprüche 1 bis 3 herstellbar ist.

## Revendications

1. Procédé de fabrication d'un produit simulant la vraie chair de pattes de crabe à partir d'une pâte de poisson, comprenant :
une première phase de découpage d'une paire de bandes (2a, 2b) de pâte de chair de poisson coagulée à la chaleur en deux groupes de cordonw en forme de nouille pendant que ces bandes se déplacent sur une bande transporteuse (1a, 1b), et de réunion des cordons de chacun des groupes de cordons obtenus pour former un faisceau allongé continu (5a, 5b) de section à forme générale rectangulaire;
une seconde phase de découpage successif, en biais par rapport à la direction longitudinale, de chacun des faisceaux continus (5a, 5b) pendant que chacun des faisceaux est transporté individuellement pour produire plusieurs blocs (7a, 7b) de forme générale parallélépipédique ayant chacun un angle aigu (_) à son extrémité avant;
une troisième phase de transport des blocs (7a, 7b) côte à côte par paire et de réunion des deux blocs de la paire en un seul et unique bloc (10) ayant la forme d'une empennage de flèche, avec une surface de découpe (9a) d'un des blocs (7a) de chaque paire accolée à la face de découpe opposée (9b) de l'autre bloc (7b); et
une quatrième phase d'enveloppement successif de chacun des blocs dans une feuille (F) de pellicule comestible pendant que les blocs sont transportés.

2. Procédé selon la revendication 1, caractérisé par le fait qu'il comprend une phase supplémentaire cinq qui place sur leur côté chacun des blocs enveloppés (10) préparé au cours des phases un à quatre de façon à ce que les blocs enveloppés reposent sur leur côté sur la bande transporteuse (12) et, pendant leur transport, un découpage successif de chacun des blocs en deux moitiés (10a, 10b) selon un angle de faible ouverture (0̸) par rapport à la direction longitudinale de ces blocs.

3. Le procédé selon la revendication 1 ou 2, caractérisé par le fait que la feuille de pellicule comestible est colorée de manière à ce que les blocs enveloppés aient l'aspect de la vraie chair de pattes de crabe.

4. Un produit comestible obtenu par le procédé selon l'une quelconque des revendications 1 à 3.
